# EUROPÄISCHE PATENTSCHRIFT

(11) **EP 1 840 368 B1**
(45) Veröffentlichungstag und Bekanntmachung des Hinweises auf die Patenterteilung: **17.11.2010**
(21) Anmeldenummer: 07102114.1
(22) Anmeldetag: 12.02.2007
(51) Int. Cl.: F02M 61/16, F02M 61/18, B23H 7/26, B23H 7/30, B23H 9/14

(54) **Einspritzdüse mit Spritzkanälen sowie Verfahren zur Einbringung von Kanälen**
Injection nozzle with spray ducts and method for inserting ducts
Buse d'injection dotée de canaux d'injection et procédé d'introduction de canaux

(30) Priorität: 27.03.2006 DE 102006013962
(43) Veröffentlichungstag der Anmeldung: 03.10.2007
(73) Patentinhaber: ROBERT BOSCH GMBH, 70442 Stuttgart (DE)
(72) Erfinder: Hopf, Wilhelm, 74343 Sachsenheim (DE); Schoepf, Martin, 70499 Stuttgart (DE); Schaefer, Bernd, 71636 Ludwigsburg (DE)

(56) Entgegenhaltungen:
- EP-A- 1 584 397
- WO-A-03/041900
- DE-A1- 4 039 520
- DE-A1- 19 915 874
- DE-A1- 19 925 380
- DE-A1-102004 019 543
- JP-A- 55 112 726

## Beschreibung

Die Erfindung betrifft ein Verfahren zur Einbringung von ausgeformten Kanälen in ein fixiertes Werkstück, insbesondere in den Düsenkörper einer Einspritzdüse, gemäß dem Oberbegriff des Anspruches 1.

### Stand der Technik

Aus der DE 103 58 861 A1 ist eine Einspritzdüse für eine Brennkraftmaschine bekannt. In den Düsenkörper sind mehrere beabstandete Spritzkanäle eingebracht. Sämtliche Spritzkanäle sind identisch und zylindrisch ausgebildet.

Die Spritzkanäle werden meist über ein, beispielsweise in der WO 03/041900 A2 beschriebenes EDM (Electrical Discharge Machining) - Verfahren eingebracht. Bei einer derartigen elektroerosiven Bearbeitung der Einspritzdüse wird zwischen einer Elektrode und der Bearbeitungsstelle der Einspritzdüse ein elektrisches Feld angelegt. Außerdem wird der Bearbeitungsstelle eine geeignete Bearbeitungsflüssigkeit, insbesondere ein Dielektrikum, zugeführt. Das bekannte EDM-Verfahren umfasst eine Magnetspaltregelung. Hierbei wird durch ein stationäres Magnetfeld ein axialer Abstand zwischen der Elektrode und der Bearbeitungsstelle des fixierten Werkstücks geregelt. Dabei ist vorgesehen, dass die Elektrode als ein stromdurchflossener Leiter ausgebildet und innerhalb des Magnetfelds angeordnet ist. Die innerhalb des Magnetfelds auf die Elektrode wirkende Lorentz-Kraft lenkt die Elektrode in horizontaler Richtung aus, wodurch eine Axialbewegung des freien Endes der Elektrode resultiert. Hierdurch wird der Abstand zwischen Elektrode und Werkstück in Abhängigkeit des fließenden Stroms eingestellt. Je größer der Strom ist, desto größer ist die auf die Elektrode wirkende Lorentz-Kraft und die damit verbundene Auslenkung. Das freie Ende der Elektrode entfernt sich demnach axial um so mehr vom Werkstück, je größer der durch den Leiter fließende Strom ist.

Aus der nachveröffentlichten DE 10 2004 060 290 A1 ist es bekannt, die Elektrode durch eine obere Führung und eine untere Führung zu führen, zwischen denen ein Magnetfeld erzeugt wird, wobei die obere Führung und die untere Führung in einem Abstand zum Magnetfeld angeordnet sind. Aus der Druckschrift ist es bekannt, das Magnetfeld zu drehen und über die Wahl der Abstände der Führungen zu dem Magnetfeld die Amplitude einer Bewegung des Elektrodenendes zu regulieren.

Werkstücke in Form von Einspritzdüsen mit unterschiedlich ausgeformten Kanälen zur Beeinflussung der verteilung des Kraftstoffs bei der Einspritzung sowie auch zur Optimierung der Einspritzstrahlgeometrie in Abhängigkeit von lokalen Erfordernissen sind unter anderem aus der DE 199 25 380 A1 und DE 199 15 874 A1 bekannt. Aufgezeigt sind dort unter anderem Einspritzdüsen, die mit mehreren unterschiedlich ausgeformten Kanälen versehen sind, beispielsweise mit Kanälen unterschiedlicher Konizität und/oder unterschiedlicher Winkellage ihrer Kanalachsen zur Achse des Düsenkörpers. Weiter sind auch Kanäle mit schlitzförmigem Querschnitt aufgezeigt.

### Offenbarung der Erfindung

Der Erfindung liegt die Aufgabe zugrunde, ein Verfahren zur Einbringung mehrerer Kanäle mit unterschiedlicher Kanalgeometrie in ein Werkstück, insbesondere in eine Einspritzdüse anzugeben.

Diese Aufgabe wird mit den Merkmalen des Anspruches gelöst. Die Unteransprüche geben zweckmäßige Weiterbildungen an.

Als mit dem erfindungsgemäßen Verfahren in ein Werkstück, insbesondere in einen Düsenkörper einzubringende, unterschiedlich ausgeformte Kanäle kommen unter anderem solche in Frage, bei denen ein Kanal kreiszylinderförmig ausgebildet ist. Daneben ist es möglich, einen Kanal mit einer Konizität zu versehen. Zusätzlich oder alternativ können sich die Querschnittsflächen zumindest eines Kanales über seiner Längserstreckung verändern. So beispielsweise derart, dass die Einlassöffnung oberhalb und die Auslassöffnung kreisrund ausgebildet ist, oder umgekehrt, und sich die Querschnittsflächen kontinuierlich an diese Form über der Längserstreckung des Kanales annähern.

Ebenso ist es denkbar, einen ovalzylindrischen Einspritzkanal mit gerade verlaufenden Seitenwänden vorzusehen.

Ferner kann mindestens ein Einspritzkanal sich zunächst über eine Teilerstreckung konisch verjüngen und sich nach Erreichen eines minimalen Querschnittes konisch erweitern, etwa in Form einer Sanduhr oder einer Laval-Düse.

Weiter sind auch Kanalformen möglich, bei denen die Einlassöffnung, die Auslassöffnung und/oder die in

Längsrichtung beabstandeten, parallelen Querschnittsflächen des Kanales polygonartig, insbesondere dreieckartig, ausgeformt sind.

Die mindestens zwei unterschiedlich ausgebildeten Kanäle werden bei dem erfindungsgemäßen elektroerosiven Verfahren in einer gemeinsamen Vorrichtung hergestellt, wobei ein vom Strom durchflossener Leiter (Elektrode) durch ein Magnetfeld geführt wird. Zur Führung der Elektrode sind zwei beabstandete Führungen vorgesehen, durch die die vorzugsweise als Stabelektrode ausgeführte Elektrode jeweils mit Radialspiel geführt ist. Dabei weist bevorzugt mindestens eine Führung einen konischen Einlaufabschnitt auf, um die Elektrode einfach einfädeln zu können. Daran schließt sich ein bevorzugt kreiszylindrischer Abschnitt an. Das radiale Führungsspiel in den kreiszylindrischen Abschnitten beträgt dabei wenige µm, vorzugsweise etwa 3 bis 6 µm. Die Führungen, zumindest der kreiszylinderförmige Abschnitt jeder Führung, ist bevorzugt aus keramischem Material ausgebildet.

Die Elektrode überragt die untere Führung in Richtung Werkstück. Die Länge (Z-Maß) des überstehenden Abschnitts ist variierbar, beispielsweise durch Nachführen von Elektrodenmaterial. Dabei ist es denkbar, die Elektrode beispielsweise über eine oberhalb der oberen Führung angeordnete Vorratsrolle abzuwickeln und nachzuführen. Das Z-Maß wird bevorzugt in einem Bereich zwischen 0,1 mm bis 2 mm variiert. Bei der Einstellung des Z-Maßes muss der Elektrodenabtrag während des elektroerosiven Arbeitsprozesses berücksichtigt werden.

Aufgrund des auf die Strom durchflossene Elektrode wirkenden Magnetfelds wirkt auf die Elektrode eine Lorentz-Kraft, die die Elektrode innerhalb des Magnetfelds, insbesondere senkrecht zur Ihrer Längserstreckung, auslenkt. Die Amplitude der Auslenkung kann über den Abstand der Führungen zueinander bzw. des Abstandes mindestens einer Führung zu dem zwischen den Führungen angeordneten Magnetfeld variiert werden. Einfluss auf die Amplitude der Auslenkung des Elektrodenendes kann auch über die Wahl bzw. Variation der Länge des die untere Führung in Richtung Werkstück überragenden Abschnitts genommen werden. Je größer diese Länge ist, desto größer ist die Amplitude der Auslenkung.

Es kann beispielsweise auch über die Wahl der Leerlaufspannung des Impulsstromgenerators auf die Amplitude der Auslenkbewegung des freien Endes der Elektrode Einfluss genommen werden.

Wird die Elektrode von einem sich zeitlich ändernden Strom durchflossen, so wird die Elektrode zu einer mindestens eindimensionalen Bewegung oder Schwingung angeregt. Durch Variation der genannten Größen kann auf die Amplitude dieser Bewegung bzw. Schwingung Einfluss genommen werden. Es ist auch denkbar, die Polung von Elektromagneten mehrfach zu wechseln, um die Elektrode zu einer Schwingung anzuregen.

Zur Herstellung von Kanälen mit unterschiedlichen Kanalgeometrien können zusätzlich oder alternativ zu den genannten Parametern auch noch die Stärke des Magnetfelds sowie die Ausrichtung des Magnetfelds, also die Winkellage der Magnetfeldlinien in der Radialebene der Elektrode, variiert werden. Zur Änderung der Ausrichtung des Magnetfelds sind die es erzeugenden Permanent- und/oder Elektromagnete beispielsweise mithilfe eines Schrittmotors verdrehbar, so dass hierüber die Auslenkrichtung bzw. Schwingungsrichtung des freien Endes der Elektrode variierbar ist. Ebenfalls ist es denkbar, dass das Magnetfeld, vorzugsweise kontinuierlich mit gleich bleibender Winkelgeschwindigkeit, während der Bearbeitung des Werkstücks gedreht wird. Die Rotation des Magnetfelds ist notwendig, um konische Kanalgeometrien mit kreisrunden Ein- und Auslassöffnungen herzustellen.

Bei der Herstellung unterschiedlich ausgeformter Kanäle muss mindestens einer der genannten Parameter bei der Einbringung der Kanäle unterschiedlich gewählt werden bzw. der Verlauf des Parameters über die Zeit muss bei der Einbringung der Kanäle unterschiedlich sein.

Um besondere Kanalgeometrien zu erzeugen, beispielsweise zur Erzeugung eines doppelt-konischen Kanals mit sich zunächst verjüngendem und dann wieder verbreiterndem Kanalquerschnitt ist es von Vorteil, wenn die Elektrode zusätzlich, zumindest zeitweise, planetär, das heißt um eine Drehachse rotierbar angeordnet ist. Hierfür kann beispielsweise ein Schrittmotor vorgesehen werden.

Bevorzugt erfolgt die Bearbeitung des Werkstücks in ein und derselben Fixierlage. Hierdurch kann die größtmögliche Genauigkeit hinsichtlich der Kanallage erreicht werden. Selbstverständlich kann das Werkstück zusammen mit der Fixiereinrichtung relativ zu der Elektrode bewegt werden. Es kommt lediglich darauf an, dass das Werkstück nach dem Einbringen des ersten Kanals nicht gelöst und neu fixiert wird, sondern dass das Werkstück nur einmal fixiert wird.

### Kurze Beschreibung der Zeichnungen

Weitere Vorteile und zweckmäßige Ausführungen sind den weiteren Ansprüchen, der Figurenbeschreibung und den Zeichnungen zu entnehmen. Es zeigen:
- Fig. 1: einen Ausschnitt einer Einspritzdüse mit einer axial verstellbaren Düsennadel sowie mit zwei unterschiedlich ausgeformten Einspritzkanälen,
- Fig. 2: in schematischer Darstellung eine Ausführungsform einer EDM-Vorrichtung zur Durchführung des erfindungsgemäßen Herstellungsverfahrens, und
- Fig. 3-10: mögliche unterschiedliche Ausformungen von Kanälen, insbesondere von Spritzkanälen in einer Einspritzdüse.

### Ausführungsform(en) der Erfindung

In den Figuren sind gleiche Bauteile und Bauteile mit gleicher Funktion mit den gleichen Bezugszeichen versehen.

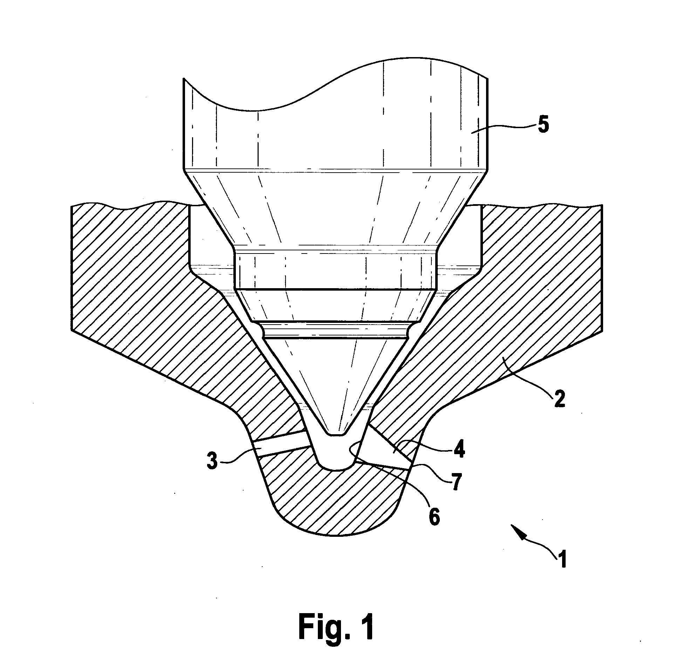

In Fig. 1 ist der vordere Abschnitt einer Einspritzdüse 1 gezeigt. Die Einspritzdüse 1 weist einen Düsenkörper 2 auf, der sich in seinem vorderen Bereich zu einer Düsenspitze verjüngt. Im Bereich der Düsenspitze sind zwei unterschiedlich ausgeformte Spritzkanäle 3,4 für Kraftstoff eingebracht. Im Inneren des Düsenkörpers 2 befindet sich eine Düsennadel 5 zum Steuern der Spritzkanäle 3, 4. Der in der Zeichnungsebene linke Spritzkanal 3 weist einen konstanten kreiszylinderförmigen Verlauf auf, wohingegen sich der zweite Spritzkanal 4 nach außen hin konisch verjüngt. Dabei sind sämtliche in Längsrichtung beabstandeten parallelen Querschnitte der zweiten Spritzdüse 4 kreisförmig ausgebildet. Es ist auch denkbar, dass sich die Kontur der Querschnitte in Längsrichtung des Spritzkanals 4 gesehen von einer ovalen oder elliptischen Einlassöffnung 6 an eine beispielsweise kreisrunde Auslassöffnung 7 annähern.

Die Einspritzdüse 1 weist insgesamt etwa drei bis zehn Spritzkanäle auf, wobei aus Übersichtlichkeitsgründen nur die beiden Spritzkanäle 3 und 4 gezeigt sind. Die Tiefe der Spritzkanäle 3, 4 beträgt etwa 1 mm.

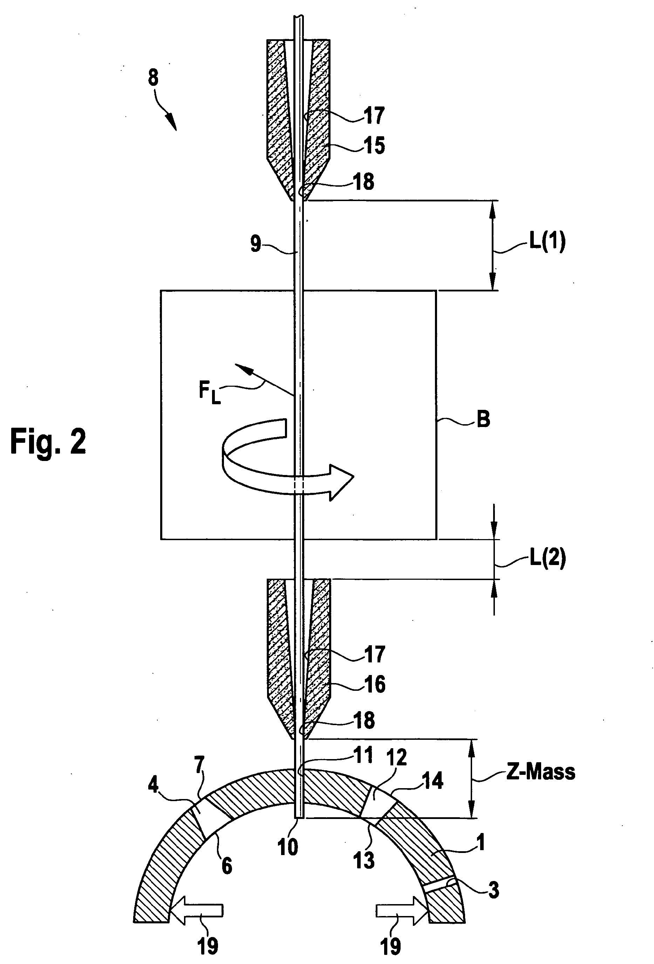

In Fig. 2 ist schematisch eine Vorrichtung 8 zur EDM (Electrical Discharge Machining) -Bearbeitung von Werkstücken, insbesondere Einspritzdüsen, gezeigt. Die Vorrichtung 1 weist eine nur abschnittweise dargestellte, als elektrischer Leiter ausgebildete, drahtförmige Elektrode 9 auf, die von einer nicht dargestellten Rolle abwickelbar und in Richtung Werkstück 1 nachführbar ist, um den während des Bearbeitungsprozesses abgetragenen Elektrodenabschnitt auszugleichen und um den Überstand der Elektrode über die untere Führung (Z-Maß) in Richtung Werkstück zu variieren. Durch die Elektrode 9 fließt ein sich zeitlich verändernder Strom, so dass an dem freien Ende 10 der Elektrode 9 und einer Bearbeitungsstelle des Werkstücks, hier der Einspritzdüse 1, ein elektrisches Feld anliegt. Unter Zuführung einer geeigneten Bearbeitungsflüssigkeit, beispielsweise eines Dielektrikums, kann an der Einspritzdüse 1 ein Materialabtrag hervorgerufen werden, so dass in das Werkstück mehrere Kanäle 3, 4, 11, 12 gebohrt werden. Mindestens zwei der Kanäle 3, 4, 11, 12 sind gemäß der Erfindung unterschiedlich ausgebildet. Im gezeigten Ausführungsbeispiel sind die Kanäle 3, 11 identisch und kreiszylinderförmig ausgebildet. Der Kanal 4 verjüngt sich von der Einlassseite 6 zur Auslassseite 7 konisch, wohingegen sich der Kanal 12 von seiner Einlassseite 13 hin zu seiner Auslassseite 14 konisch verbreitert. Die Elektrode 9 ist durch eine obere Führung 15 und eine davon in axialer Richtung beabstandete untere Führung 16 geführt. Beide Führungen 15, 16 sind aus keramischem Material ausgebildet. Beide Führungen 15, 16 weisen einen oberen sich konisch verjüngenden Einführabschnitt 17 sowie einen daran anschließenden kreiszylinderförmigen Führungsabschnitt 18 auf. Durch die Führungsabschnitte 18 ist die Elektrode 9 mit einem Radialspiel, vorzugsweise kleiner als 10µm geführt.

Zwischen den beiden Führungen 15, 16 befindet sich Magnetfeld B, das von nicht dargestellten Magneten erzeugt wird und senkrecht zur Längsachse der Elektrode 9 orientiert ist.

Sobald durch die Elektrode 9 ein sich, vorzugsweise zeitlich verändernder Strom fließt, so wirkt auf die Elektrode 9 eine Lorentz-Kraft. Dies führt dazu, dass die Elektrode 9 senkrecht zu ihrer Längsachse ausgelenkt bzw. in eine Bewegung oder Schwingung versetzt wird. Hierdurch wird auch das freie Ende 10 der Elektrode 9 relativ zu dem Werkstück, hier der Einspritzdüse 1, ausgelenkt bzw. in eine Schwingungsbewegung versetzt.

Wird das Magnetfeld B dabei gedreht, beispielsweise mittels eines Schrittmotors oder durch geschickte Bestromung von in Umfangsrichtung beabstandeten Elektromagneten, so wird auch die Schwingungsebene des freien Endes 10 gedreht, wodurch unterschiedliche Kanalgeometrien geschaffen werden können.

Wie aus Fig. 2 ersichtlich ist, überragt die Elektrode 9 die untere Führung 16 um die Länge Z-Maß. Diese Länge ist vorzugsweise in einem Bereich zwischen 0,1 und 2 mm variierbar. Je größer diese Länge gewählt wird, desto größer ist die Amplitude der Auslenkung bzw. Schwingung des freien Endes 10.

Die beiden Führungen 15, 16 sind mit einem Abstand zueinander angeordnet. Die obere Führung weist einen Abstand L(1) zu dem Magnetfeld B und die untere Führung einen Abstand L(2) zu dem Magnetfeld B auf. Durch die Abstände L(1) und L(2) der beiden Führungen 15, 16 zum Magnetfeld B, insbesondere zu den nicht dargestellten Magneten, wird die Auslenkung bzw. Amplitude des zwischen den Führungen 15, 16 befindlichen Abschnitts der Elektrode 9 und damit die Amplitude bzw. Auslenkung des sich ebenfalls bewegenden freien Endes 10 der Elektrode 9 beeinflusst. Zumindest einer der beiden Abstände L(1) oder L(2) ist durch Veränderung der Position der jeweiligen Führung 15, 16 veränderbar. Somit kann durch eine Variation der Abstände L(1) und/oder L(2) sowie durch eine Variation der Länge (Z-Maß) Einfluss auf die Amplitude der Auslenkung bzw. Schwingung des freien Endes 10 genommen werden. Ebenso kann hierfür die Stärke des Magnetfeldes B, also dessen Energiedichte oder die Stromstärke des durch die Elektrode 9 fließenden Stroms verändert werden.

Zusätzlich kann auf die Lochform durch Rotation des Magnetfeldes B, beispielsweise durch Rotation der Magnete mittels eines Schrittmotors, Einfluss genommen werden. Es ist auch denkbar, beispielsweise mittels eines Schrittmotors die Ausrichtung des Magnetfeldes, also die Ausrichtung der Magnetfeldlinien zu beeinflussen. Hierdurch wiederum kann die Schwingungsrichtung des freien Endes 10 der Elektrode 9 beeinflusst werden. Durch eine schrittweise Änderung der Ausrichtung des Magnetfeldes B können polygone Kanäle geschaffen werden.

Mindestens einer der genannten Parameter bzw. der Verlauf des Parameters über die Zeit muss bei den mindestens zwei unterschiedlich ausgebildeten Kanälen zur Herstellung der unterschiedlichen Kanalgeometrien variiert werden.

Mittels der Pfeile 19 ist eine Fixiereinrichtung für das Werkstück, hier die Einspritzdüse 1 gezeigt. Das Verfahren zeichnet sich dadurch aus, dass das Werkstück, hier die Einspritzdüse 1 während der Herstellung mindestens zweier unterschiedlicher Kanäle nicht umgespannt werden muss. Vielmehr bleibt es während der Einbringung von mindestens zwei beabstandeten Kanälen unterschiedlicher Ausformung in derselben Fixierposition. Da die unterschiedlichen Kanäle mit ein und derselben Vorrichtung eingebracht werden können, muss das Werkstück zwischen den Bohrungen zweier unterschiedlicher ausgeformter Kanäle nicht gelöst und wieder fixiert werden.

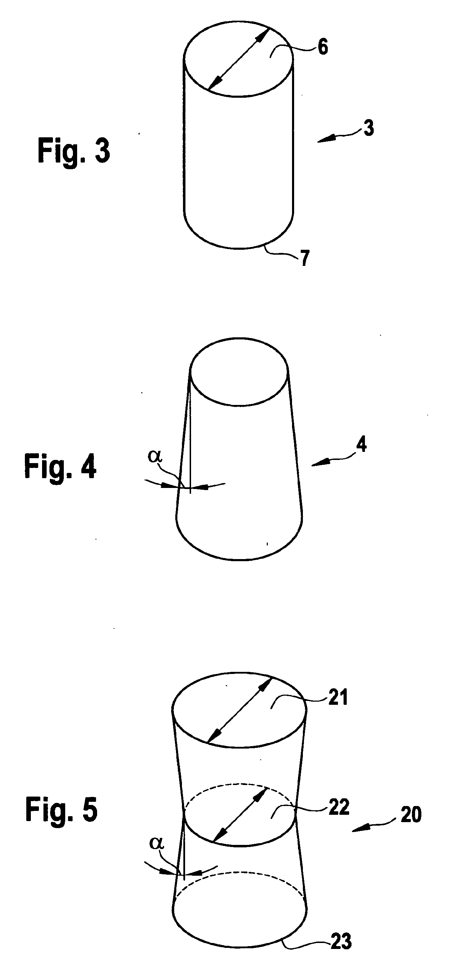

Einige mögliche Kanalgeometrien sind in den Fig. 3 bis 10 dargestellt. Zur Einbringung von Kanälen in Werkstücke wird die Elektrode 9 in Richtung Werkstück nachgeführt.

In Fig. 3 ist ein Kanal 3 eines Werkstücks dargestellt. Die Einlassöffnung 6 sowie die Auslassöffnung 7 sind ebenso wie sämtliche in Längsrichtung beabstandeten Querschnitte des Kanals 3 kreisrund ausgebildet. Zur Herstellung der kreisrunden Ein- und Auslassöffnungen 6, 7 sowie der kreisrunden Querschnitte gibt es mehrere Möglichkeiten. Zum einen kann das Magnetfeld abgeschaltet werden und der Kanal lediglich durch Vorschub der Elektrode 9, das heißt durch Verlängerung der Länge Z-Maß, gebohrt werden. Eine weitere Möglichkeit besteht darin, das Magnetfeld statisch, also nicht rotierend, anzuordnen, minimale Abstände L(1) und L(2) vorzusehen und dann das Z-Maß zu erhöhen. Ferner ist es möglich, bei geringen Abständen L(1) und L(2) das Magnetfeld rotierend zu betreiben, was positive Auswirkungen auf die Qualität der Rundung hat.

Bei der Festlegung der Änderung des Z-Maßes während der Bohrung muss der Elektrodenabtrag durch den elektroerosiven Abtragungsprozess berücksichtigt werden.

In Fig. 4 ist ein Kanal 4 mit einem konischen Verlauf und kreisrunden Ein- und Auslassöffnungen sowie kreisrunden in Längsrichtung beabstandeten Querschnitten unterschiedlichen Durchmessers gezeigt. Zur Herstellung eines derartigen Kanals 4 wird das Magnetfeld rotierend betrieben. Die Einstellung der Konizität erfolgt über die Wahl oder die Variation des Abstandes der Führungen 15, 16 zueinander bzw. über die Wahl oder Variation der Parameter L(1) und/oder L(2). Je größer die Abstände gewählt werden, desto größere Konizitäten können hergestellt werden und umgekehrt. Es hat sich als vorteilhaft herausgestellt, lediglich den Abstand L(1) zu variieren und L(2) konstant zu halten. Eine weitere Möglichkeit, die Konizität zu beeinflussen, besteht in der Variation der magnetischen Energiedichte. Diese kann durch einen Elektromagneten elektrisch verstellt bzw. beeinflusst werden und somit im Bereich des Magnetfelds die Amplitude der erzwungenen Elektrodenauslenkung variiert werden. Je größer die Energiedichte gewählt wird, desto größer ist die Konizität des sich ergebenden Kanals.

Konisch verlaufende Kanäle können mittels herkömmlicher EDM-Verfahren nur eingeschränkt hergestellt werden. Momentan können im Rahmen einer Serienproduktion Konizitäten bis ca. 15 µm entsprechend dem Betrag einer Differenz eines Austrittsdurchmessers abzüglich eines Eintrittsdurchmessers des Kanals auf eine Länge von 1 mm des Kanals reproduzierbar hergestellt werden. Dies entspricht einem K-Faktor von 1,5 und einem Winkel α von etwa 0,7°. Durch die Rotation des Magnetfelds können wesentlich größere K-Faktoren bis ca. 10, was einem Winkel α von etwa 3° entspricht, erzeugt werden.

In Fig. 5 ist ein weiterer Kanal 20 dargestellt. Kanal 20 weist einen doppelt konischen Verlauf auf, wobei er sich ausgehend von einer Einlassöffnung 21 zunächst verjüngt und sich nach Erreichen einer minimalen Querschnittsfläche 22 bis zu seiner Auslassöffnung 23 konisch erweitert. Die Herstellung eines derartigen Kanals erfolgt beispielsweise durch eine Kombination eines planetären Antriebs der Elektrode 9 und einem rotierenden Magnetfeld B. Die Bearbeitung beginnt mit einer Planetärbewegung der Elektrode 9, wobei der Radius der Planetärbewegung der Elektrode 9 kontinuierlich reduziert werden muss, bis der kleinste Übergangsradius im Bereich der minimalen Querschnittsfläche 22 erreicht ist. Anschließend wird der Radius der Planetärbewegung auf Null gesetzt und die Rotation des Magnetfeldes entsprechend der gewünschten Konizität aktiviert. Dabei ist es denkbar, die Konizitäten der beiden Abschnitte des Kanals unterschiedlich zu wählen.

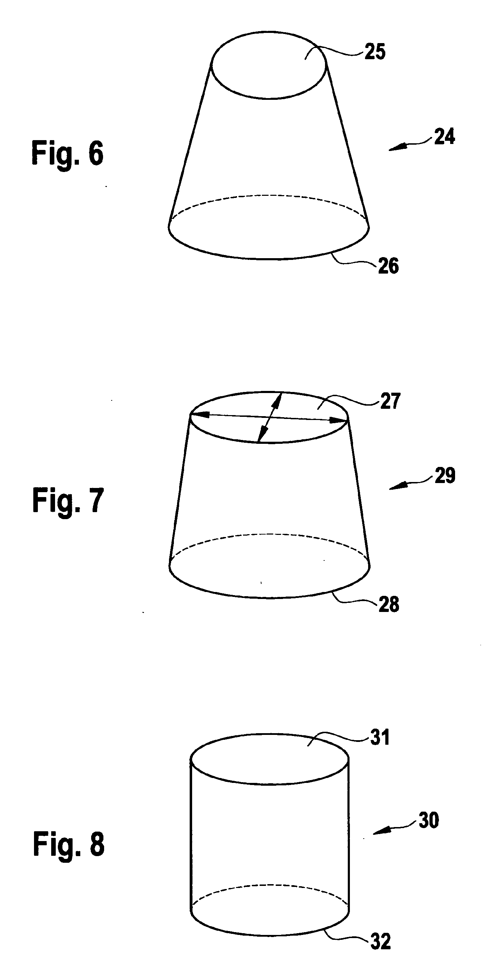

In Fig. 6 ist ein konisch verlaufender Kanal 24 mit kreisrunder Einlassöffnung 25 sowie ovaler Auslassöffnung 26 dargestellt. Bei der Herstellung eines derartigen Kanals 24 sollte das Magnetfeld nicht rotiert werden, sondern lediglich statisch ausgerichtet sein. Das Magnetfeld wird benötigt, um die Ovalität der Auslassöffnung herzustellen. Zur Herstellung einer beidseitigen Ovalität empfiehlt sich ein wechselnd polarer Strom. Die Konizität und teilweise die Ovalität werden mittels der Abstände L(1) und/oder L(2) oder der Energiedichte des Magnetfeldes eingestellt.

Wie in Fig. 7 gezeigt, besteht weiterhin die Möglichkeit, eine ovale Einlassöffnung 27 und eine ovale Auslassöffnung 28 bei einem konisch verlaufenden Kanal 29 vorzusehen. Bestimmender Parameter hierbei ist der Abstand zwischen der unteren Führung 16 und dem Werkstück, welcher für kreisförmige Einlassöffnungen klein und für ovale Einlassöffnungen groß gewählt werden muss. Die Ovalität bzw. die Konizität nimmt linear mit steigendem Z-Maß zu.

In Fig. 8 ist ein weiterer Kanal 30 gezeigt. Dieser ist zylindrisch mit ovaler Einlassöffnung 31, ovaler Auslassöffnung 32 sowie identischen in Längsrichtung beabstandeten Querschnitten ausgebildet. Zur Herstellung ovaler Querschnitte sollten die Abstände L(1) und/oder L(2) und/oder die Energiedichte des Magnetfeldes B groß gewählt werden. Hierbei würde sich jedoch automatisch ein konischer Bohrungsverlauf ergeben. Um dies zu vermeiden, ist es notwendig, die für die Konizität relevanten Parameter L(1) und/oder L(2) sowie die Energiedichte des Magnetfeldes entsprechend der Vorschubbewegung der Elektrode 9 zu reduzieren. Die Position des freien Endes 10 der Elektroden 9 aus der Z-Achse muss somit in der Maschinensteuerung Berücksichtigung finden.

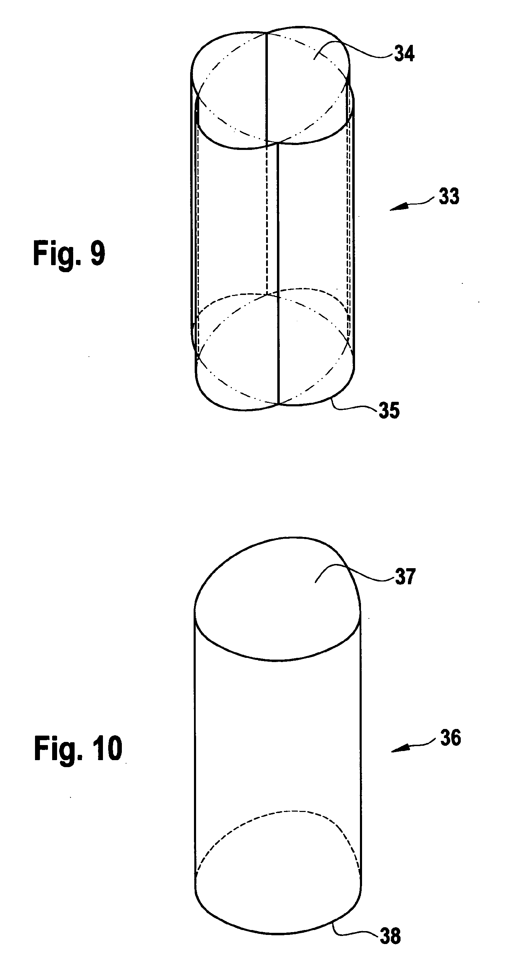

In Fig. 9 ist ein Kanal 33 mit einer sternförmigen oder kreuzförmigen Einlassöffnung 34 sowie einer identisch ausgewählten Auslassöffnung 35 gezeigt. Um die in Fig. 9 dargestellte Ausbildung des Kanals 33 zu erreichen, wurde Kanal 33 in zwei Phasen gebohrt, wobei das Magnetfeld zwischen den zwei Phasen um 90° verdreht wurde, wodurch das freie Ende 10 der Elektrode 9 Schwingungen in zwei um 90°gedrehte Richtungen mit jeweils derselben Amplitude ausführte. Hierzu ist mit Vorteil ein Schrittmotor vorgesehen. Es ist auch denkbar, in Umfangsrichtung beabstandete Elektromagnete geschickt zu bestromen. Der in Fig. 9 dargestellte Kanal 33 ist beispielsweise auch mit einem konischen Bohrungsverlauf herstellbar.

In Fig. 10 ist ein Kanal 36 mit polygonartiger Einlassöffnung 37 sowie identischer Auslassöffnung gezeigt.

Durch das schrittweise Drehen des Magnetfeldes zwischen zeitlich beabstandeten Bearbeitungsphasen können nahezu beliebige Kanalgeometrien erzeugt werden. Dabei werden zwei oder mehrere ovale Kanäle überlagert oder anders ausgedrückt entsteht ein Kanal mit einer Querschnittsfläche, die umfänglich mehrere unter Winkeln versetzte Bögen aufweisen.

## Patentansprüche

1. Verfahren zur Einbringung von ausgeformten Kanälen (3, 4) in ein fixiertes Werkstück (1), insbesondere in den Düsenkörper einer Einspritzdüse, unter Verwendung einer in einem bei Bedarf drehbaren Magnetfeld (B) angeordneten, von Strom durchflossenen und parameterabhängig verstellbaren Elektrode (9), die in einer oberen und einer unteren Führung (15, 16) geführt ist und die die untere Führung (16) um eine Länge (Z-Maß) überragt,
**dadurch gekennzeichnet,**
**dass** über die mit Radialspiel in den Führungen (15, 16) geführte Elektrode (9) mindestens zwei unterschiedlich ausgeformte Kanäle (3, 4) in das Werkstück (1) eingebracht werden, dass mindestens ein Parameter, oder die zeitliche Änderung eines Parameters, zur Beeinflussung der zur Längsachse der Elektrode senkrechten Auslenkbewegung des freien Endes der Elektrode (9) bei der Herstellung der mindestens zwei unterschiedlich ausgeformten Kanäle (3, 4) unterschiedlich gewählt wird und dass die unterschiedlich ausgeformten Kanäle (3, 4) in derselben Fixierlage des Werkstückes (1) sämtlich mit derselben Elektrode (9) eingebracht werden.

2. Verfahren nach Anspruch 1,
**dadurch gekennzeichnet,**
**dass** das Werkstück (1) zusammen mit der Fixiereinrichtung (19) relativ zur Elektrode (9) bewegt wird.

3. Verfahren nach Anspruch 1,
**dadurch gekennzeichnet,**
**dass** die Elektrode (9) in den Führungen (15, 16) über einen sich konisch verjüngenden Einführabschnitt (17) in einen daran anschließenden kreiszylindrischen Führabschnitt (18) eingefädelt wird.

4. Verfahren nach einem der Ansprüche 1 bis 3,
**dadurch gekennzeichnet,**
**dass** mindestens einer der folgenden Parameter oder die zeitliche Änderung mindestens eines der folgenden Parameter zur Erzielung unterschiedlicher Kanalgeometrien unterschiedlich gewählt wird:
Der Abstand zwischen den Führungen (15, 16), die die untere Führung (16) überragende Länge (Z-Maß) der Elektrode (9), der Abstand zwischen der unteren Führung (16) und dem Werkstück (1),
die Ausrichtung des Magnetfeldes (B), die Stärke des Magnetfeldes (B), die statische oder drehende Anordnung des Magnetfeldes (B).

5. Verfahren nach einem der vorhergehenden Ansprüche,
**dadurch gekennzeichnet,**
**dass** die Elektrode (9) planar um eine, insbesondere feste, Drehachse gedreht wird.

6. Verfahren nach einem der Ansprüche 1 bis 5,
**dadurch gekennzeichnet,**
**dass** ein Schrittmotor zur Drehung bzw. Ausrichtung des Magnetfeldes (B) verwendet wird.

7. Verfahren nach einem der Ansprüche 1 bis 6,
**dadurch gekennzeichnet,**
**dass** die Elektrode (9) von einem sich zeitlich ändernden Strom, vorzugsweise von einem gepulsten Strom, insbesondere von einem bipolar gepulsten Strom, durchflossen wird.

8. Verfahren nach einem der Ansprüche 1 bis 7,
**dadurch gekennzeichnet,**
**dass** mindestens ein Parameter in Abhängigkeit von der Vorschubposition des freien Endes (10) der Elektrode (9) verändert wird.

## Claims

1. Method for the introduction of shaped-out ducts (3, 4) into a fixed workpiece (1), in particular into the nozzle body of an injection nozzle, using an electrode (9) which is arranged in a magnetic field (B) which is rotatable, if required, and through which current flows and which is adjustable in a parameter-dependent manner and is guided in an upper and a lower guide (15, 16) and which projects beyond the lower guide (16) by the amount of a length (Z-dimension), **characterized in that** at least two differently shaped-out ducts (3, 4) are introduced into the workpiece (1) via the electrode (9) guided with radial play in the guides (15 , 16), **in that** at least one parameter or the change in time of one parameter is selected differently in order to influence the deflection movement, perpendicular to the longitudinal axis of the electrode, of the free end of the electrode (9) during the production of the at least two differently shaped-out ducts (3, 4), and **in that** the differently shaped-out ducts (3, 4) are all introduced by means of the same electrode (9) in the same fixing position of the workpiece (1).

2. Method according to Claim 1, **characterized in that** the workpiece (1) is moved, together with the fixing device (19), in relation to the electrode (9).

3. Method according to Claim 1, **characterized in that** the electrode (9) is threaded into the guides (15, 16), via a conically tapering introduction portion (17), into a circular-cylindrical guide portion (18) adjoining the latter.

4. Method according to one of Claims 1 to 3, **characterized in that** at least one of the following parameters or the changing time of at least one of the following parameters is selected differently in order to achieve different duct geometries: the distance between the guides (15, 16), the length (Z-dimension), projecting beyond the lower guide (16), of the electrode (9), the distance between the lower guide (16) and the workpiece (1), the orientation of the magnetic field (B), the intensity of the magnetic field (B), the static or rotating arrangement of the magnetic field (B).

5. Method according to one of the preceding claims, **characterized in that** the electrode (9) is rotated in a planar manner about an, in particular, fixed axis of rotation.

6. Method according to one of Claims 1 to 5, **characterized in that** a stepping motor is used for rotating or orienting the magnetic field (B).

7. Method according to one of Claims 1 to 6, **characterized in that** a current changing in time, preferably a pulsed current, in particular a bipolar-pulsed current, flows through the electrode (9).

8. Method according to one of Claims 1 to 7, **characterized in that** at least one parameter is varied as a function of the feed position of the free end (10) of the electrode (9).

## Revendications

1. Procédé pour l'insertion de canaux façonnés (3, 4) dans une pièce fixe (1), notamment dans le corps de buse d'une buse d'injection, en utilisant une électrode (9) disposée dans un champ magnétique au besoin rotatif (B), parcourue par un courant et réglable en fonction de paramètres, qui est guidée dans un guide supérieur et un guide inférieur (15, 16) et qui dépasse du guide inférieur (16) d'une longueur (dimension Z),
**caractérisé en ce qu'**au moins deux canaux (3, 4) façonnés différemment sont insérés dans la pièce (1) par le biais de l'électrode (9) guidée avec un jeu radial dans les guides (15, 16), **en ce qu'**au moins un paramètre, ou la variation temporelle d'un paramètre, sont choisis différemment pour influencer le mouvement de déviation, perpendiculairement à l'axe longitudinal de l'électrode, de l'extrémité libre de l'électrode (9) lors de la fabrication des au moins deux canaux (3, 4) façonnés différemment, et **en ce que** les canaux façonnés différemment (3, 4) sont tous insérés avec la même électrode (9) dans la même position de fixation de la pièce (1).

2. Procédé selon la revendication 1,
**caractérisé en ce que**
la pièce (1) est déplacée conjointement avec le dispositif de fixation (19) par rapport à l'électrode (9).

3. Procédé selon la revendication 1,
**caractérisé en ce que**
l'électrode (9) est enfilée dans les guides (15, 16) par le biais d'une portion d'insertion (17) se rétrécissant coniquement dans une portion de guidage (18) cylindrique circulaire s'y raccordant.

4. Procédé selon l'une quelconque des revendications 1 à 3,
**caractérisé en ce**
**qu'**au moins l'un des paramètres suivants, ou la variation dans le temps d'au moins l'un des paramètres suivants sont choisis différemment pour obtenir des géométries de canaux différentes : la distance entre les guides (15, 16), la longueur (dimension Z) de l'électrode (9) dépassant du guide inférieur (16), la distance entre le guide inférieur (16) et la pièce (1), l'orientation du champ magnétique (B), l'intensité du champ magnétique (B), l'agencement statique ou rotatif du champ magnétique (B).

5. Procédé selon l'une quelconque des revendications précédentes,
**caractérisé en ce que**
l'électrode (9) est tournée dans un plan autour d'un axe de rotation notamment fixe.

6. Procédé selon l'une quelconque des revendications 1 à 5,
**caractérisé en ce que**
l'on utilise un moteur pas-à-pas pour la rotation ou l'orientation du champ magnétique (B).

7. Procédé selon l'une quelconque des revendications 1 à 6,
**caractérisé en ce que**
l'électrode (9) est parcourue par un courant variant dans le temps, de préférence par un courant pulsé, notamment par un courant bipolaire pulsé.

8. Procédé selon l'une quelconque des revendications 1 à 7,
**caractérisé en ce que**
l'on fait varier au moins un paramètre en fonction de la position d'avance de l'extrémité libre (10) de l'électrode (9).
